# EUROPEAN PATENT SPECIFICATION

(11) **EP 2 320 491 B1**
(45) Date of publication and mention of the grant of the patent: **31.07.2013**
(21) Application number: 10176881.0
(22) Date of filing: 15.09.2010
(51) Int. Cl.: H01M 2/34, H01M 2/10

(54) **Battery pack**
Batteriepack
Bloc-batteries

(30) Priority: 12.10.2009 US 250828 P
(43) Date of publication of application: 11.05.2011
(73) Proprietor: Samsung SDI Co., Ltd., Gyeonggi-do (KR)
(72) Inventor: Bae, Sang-Hoon, Gyeonggi-do (KR); Heo, Sang-Do, Gyeonggi-do (KR); Koh, Seok, Gyeonggi-do (KR); Park, Kyung-Ho, Gyeonggi-do (KR); Kim, Young-Ho, Gyeonggi-do (KR)
(74) Representative: Walaski, Jan Filip

(56) References cited:
- WO-A1-2007/073066
- WO-A1-2009/025433
- WO-A2-2009/069944
- KR-A- 20090 055 812

## Description

The present invention relates to a battery pack.

As the technology in mobile devices such as cellular phones and notebook computers continues to develop, the demand for secondary batteries as an energy source for such devices continues to increase rapidly. Recently, much research has been conducted into secondary batteries as an alternative energy resource for fossil fuels used in electric vehicles and hybrid electric vehicles.

In general, such secondary batteries are used in the form of a battery pack integrated with a circuit for controlling charging and discharging operations. In order to secure stability of secondary batteries including flammable materials, the battery pack has a circuit for efficiently controlling abnormal operating environments such as overcharging, overdischarging, overcurrent, or the like. The circuit mounted on a battery is covered by an upper cover. Conventional battery packs do not include an assembly structure for aligning the upper cover at the correct position on the battery and assembling the upper cover to the battery, and thus loss time increases during the assembly of the upper cover and defects caused by misalignment increase.

The present invention aims to provide a battery pack having an improved upper cover assembly structure.

According to an aspect of the present invention, there is provided a battery pack, comprising a bare cell including a cap assembly having a terminal, a protection circuit module mounted to the bare cell, the protection circuit module comprising a protection circuit board and a protective device, the protection circuit board having a through hole arranged to permit welding of the protective device to the terminal through the through hole and a cover for covering the protection circuit module, the cover comprising a protrusion arranged to engage with the through hole to retain the cover to the protection circuit board.

The protrusion may comprise a rib structure comprising first and second ribs arranged in a cross shape, wherein ends of the ribs are arranged to engage with sides of the through hole.

The protrusion may have substantially the same shape as the through hole, the sides of the protrusion being arranged to engage with sides of the through hole.

The protrusion may have a rectangular cross-section. The protrusion may have rounded portions at edges thereof to assist in locating the protrusion into the through hole.

The protection circuit board may comprise first and second electrode pads. One end of the protective device may be connected to the first electrode pad via a first connecting member, the other end of the protective device being welded to the terminal of the cap assembly. The second electrode pad may be connected to an upper surface of the cap assembly via a second connecting member.

The cap assembly may include a recess shaped to receive an end of the second connecting member so as to align the protection circuit board with the bare cell.

The first connecting member may be a flat plate and the second connecting member may have a stepped shape for supporting the protection circuit board on the cap assembly.

The battery pack may further comprise double-sided tape disposed between the protection circuit board and the cover to fix the cover to the protection circuit board.

The cover may further comprise a skirt disposed along one or more edges of the cover for engaging with a side portion of the bare cell.

The battery pack may further comprise an insulating sleeve arranged to surround the bare cell.

The battery pack may further comprise an insulating element disposed between the cap assembly and the protective device, the insulating element having an opening corresponding to a safety vent in the bare cell.

A method of making the battery pack may include mounting the protection circuit module to the bare cell, welding the protective device to the terminal of the bare cell through the through hole in the protection circuit board, and pushing the cover onto the bare cell such that the protrusion engages with the through hole to align the cover to the bare cell.

According to one or more embodiments of the present invention an assembly position of an upper cover is efficiently determined by improving the assembly structure of the upper cover to protect the circuit, and thus assembling workability may be improved. In addition, loss time caused by displacement of the upper cover may be reduced since the upper cover is fixed at the right position, and defects caused by misalignment may also be reduced.

Furthermore, a through-hole functioning as a path through which a welding apparatus passes is used, and thus a separate structure for assembling the upper structure with the battery is not necessary, thereby simplifying the assembly structure.

Embodiments of the invention will now be described by way of example with reference to the accompanying drawings, in which:
FIGS. 1 and 2 are exploded perspective views of a battery pack according to an embodiment of the present invention.
FIG. 3 is an exploded perspective view of the battery pack to explain a penetration process through a through-hole.
FIG. 4 is an exploded perspective view of an assembled upper cover of the battery pack.
FIG. 5 shows the upper cover of FIG. 4.
FIG. 6 is an exploded view of a battery pack according to another embodiment of the present invention.
FIG. 7 shows an upper cover of the battery pack of FIG. 6.
FIG. 8 is an exploded perspective view of a battery pack according to another embodiment of the present invention.
FIG. 9 is an exploded perspective view of a battery pack according to another embodiment of the present invention.

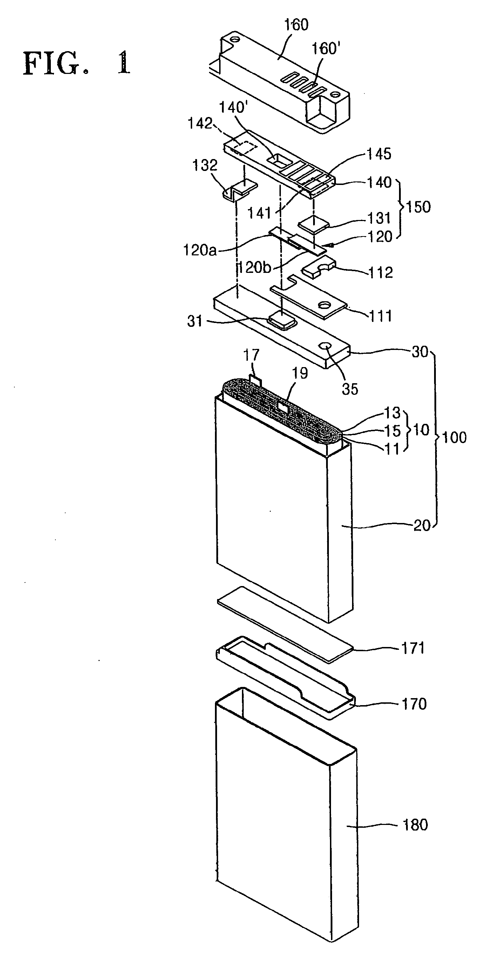

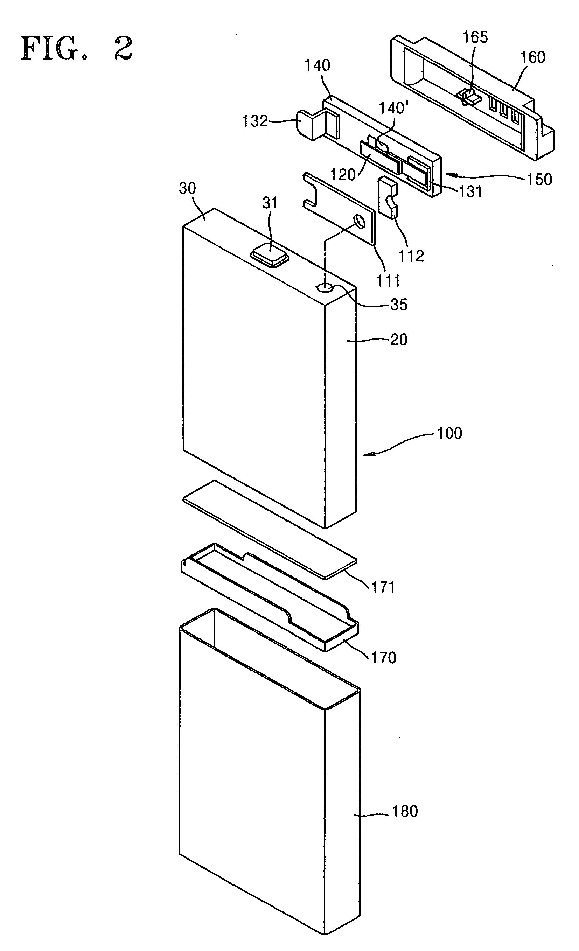

Referring to FIGS. 1 to 3, the battery pack includes a bare cell 100 including an element generating electric power, a protective circuit module (PCM) 150 mounted on the bare cell 100 and controlling a charging and discharging operation, and an upper cover 160 connected to the bare cell 100 so as to accommodate the PCM 150.

The bare cell 100 is a rechargeable secondary battery, e.g., a lithium-ion battery, in which an electrode assembly 10 including a cathode plate 11, an anode plate 13, and a separator 15 is impregnated in an electrolyte (not shown) and sealed in a can 20. For example, the bare cell 100 includes an electrode assembly 10 including a stack of a cathode plate 11, an anode plate 13, and a separator 15 and jelly-roll wound, a can 20 having an opening at the upper end to accommodate the electrode assembly 10 and the electrolyte, and a cap assembly 30 sealing the opening of the upper end of the can 20. The upper end of the can 20 is closed by the cap assembly 30 after the electrode assembly 10 is accommodated therein. The cap assembly 30 and the can 20 may be airtight-coupled by welding the contact portion thereof using a laser beam.

For example, the anode tap 17 of the electrode assembly 10 is connected to the cap assembly 30 itself, and the cathode tap 19 is connected to a first terminal 31 extending from the upper surface of the cap assembly 30. The first terminal 31 is bound to the cap assembly 30 while insulated from the cap assembly 30 and extends from the upper surface of the cap assembly 30 to electrically connect the bare cell 100 and the PCM 150.

A safety vent 35 that is designed to break so as to provide a path of a gas when an internal pressure of the can 20 is greater than a predetermined level, is disposed at one side of the cap assembly 30. Meanwhile, an insulating label sheet or sleeve 180 coated with an adhesive is attached to the outer surface of the bare cell 100. An adhesive agent 171 such as a double-coated tape may be attached to the bottom surface of the bare cell 100 to connect the bare cell 100 with a lower cover 170. The PCM 150 controls the charging and discharging operation of the bare cell 100 and performs a protective operation to protect the operation of the bare cell 100. The PCM 150 may include a protective circuit board 140, a positive temperature coefficient (PTC) protective device 120, and first and second connecting members 131 and 132.

The protective circuit board 140 and the PTC protective device 120 prevent overcharge, overcurrent, overdischarge, etc. The PTC protective device 120 forms a charging and discharging current path between the protective circuit board 140 and the bare cell 100 which will be described later, and forces the current to decrease if the charging and discharging current is greater than a predetermined level.

The protective circuit board 140 may include a wiring pattern to form a charging and discharging current path between an external device and the bare cell 100, and may be a printed circuit board (PCB) having a protective circuit limiting the charging and discharging current of the bare cell 100. For example, an external connection terminal 145 for electrical connection with the external device is disposed at one surface of the protective circuit board 140, and first and second electrode pads 141 and 142 for electrical connection with the bare cell 100 are disposed at the other surface of the protective circuit board 140. The external connection terminal 145 directly contacts the external device to input the charging and discharging current into the bare cell 100 or outputs the charging and discharging current from the bare cell 100.

The first electrode pad 141 is connected to the first terminal 31 of the cap assembly 30, and the second electrode pad 142 is connected to the upper surface of the cap assembly 30. The first and second connecting members 131 and 132 are disposed at positions corresponding to the first and second electrode pads 141 and 142 to mediate electric connection, and the PTC protective device 120 may be interposed between the first connecting member 131 and the first terminal 31 of the cap assembly 30 to form the current path therebetween. The first electrode pad 141 is connected to the first terminal 31 of the cap assembly 30 via the PTC protective device 120, and the PTC protective device 120 may include a lead 120a connected to the first terminal 31 of the cap assembly 30 at one end and a lead 120b connected to the first electrode pad 141 via the first connecting member 131 at the other end.

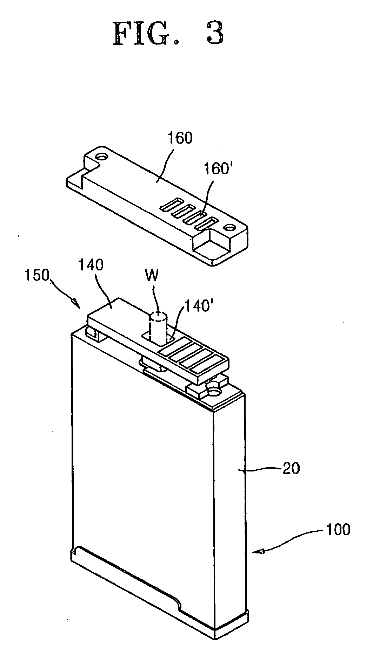

The lead 120a of the PTC protective device 120 may be welded to be fixed on the first terminal 31 of the cap assembly 30. For example, a through-hole 140' may be formed nearly at the center of the protective circuit board 140, and a welding apparatus W (FIG. 3), for example, a column-shaped electrode for welding, is inserted through the through-hole 140' to perform a spot welding that is a resistance welding between the lead 120a of the PTC protective device 120 and the first terminal 31. The through-hole 140' is used to directly weld the PTC protective device 120 and the first terminal 31 and provides a path of the welding apparatus W.

Meanwhile, the second electrode pad 142 of the protective circuit board 140 is connected to the upper surface of the cap assembly 30 via the second connecting member 132. For example, the second connecting member 132 may have stepped upper and lower parts that is twice-bent, wherein the upper part is connected to the second electrode pad 142, and the lower part is connected to the cap assembly 30. The first and second connecting members 131 and 132 may be formed by processing a nickel (Ni) or aluminum (Al) thin film to have a predetermined shape.

An insulating element comprising an insulation tape 111 and an insulation spacer 112 may be interposed between the PCM 150 and the cap assembly 30. The insulation tape 111 and the insulation spacer 112 prevent an electrical short-circuit between the PCM 150 and the cap assembly 30. For example, the insulation tape 111 is interposed between the PTC protective device 120 and the cap assembly 30 to prevent a short-circuit. The insulation spacer 112 supports a part of the PCM 150 so that the PCM 150 is spaced apart from the cap assembly 30 by a predetermined distance. The insulation spacer 112 supports the step difference between the leads 120a and 120b disposed at both sides of the PTC protective device 120. The PTC protective device 120 may be disposed on the cap assembly 30 by interposing the insulation spacer 112 that supports the stepped structure therebetween. Meanwhile, the insulation tape 111 and insulation spacer 112 may have an opening corresponding to the safety vent 35 so that the safety vent 35 formed on the cap assembly 30 is not blocked.

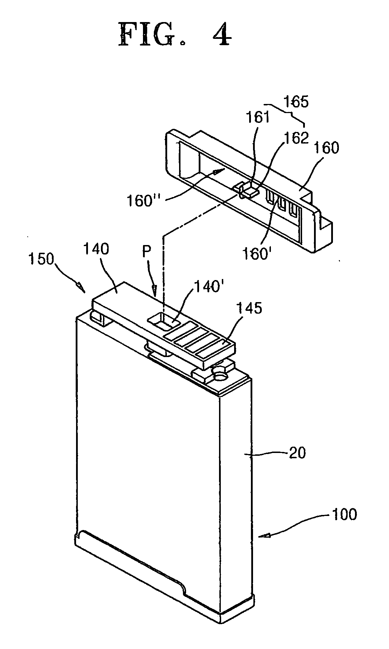

FIG. 4 is an exploded perspective view of an assembled upper cover 160 of the battery pack. Referring to FIG. 4, the upper cover 160 is assembled onto the bare cell 100 so as to accommodate the PCM 150 mounted on the bare cell 100. The upper cover 160 may have an opening pattern 160' to expose the external connection terminal 145 of the protective circuit board 140 and allow the external connection terminal 145 to be connected to an external device. A double-coated tape (not shown) may be interposed between the upper cover 160 and the PCM 150 to mediate to the connection thereof.

The upper cover 160 may have an accommodation portion 160" having a concave shape to accommodate the PCM 150. The upper cover 160 includes a protrusion 165 protruding downward to the PCM 150 to be engaged with an assembly position P of the PCM 150. The protrusion 165 is engaged with the PCM 150 integrated with the bare cell 100 so that the upper cover 160 and the bare cell 100 may be positioned. The protrusion 165 aligns the upper cover 160 with respect to the bare cell 100, regulates the assembly position of the upper cover 160, and provides the binding force between the upper cover 160 and the bare cell 100. According to the present embodiment, a through-hole 140' is formed at the assembly position P of the PCM 150, and the protrusion 165 is engaged with the through-hole 140'. The through-hole 140' functions as a path through which a welding apparatus W (FIG. 3) passes and an assembly structure with which the protrusion 165 is engaged. Since the through-hole 140' is used to be engaged with the protrusion 165, a separate structure to be engaged with the protrusion 165 is not necessary, thereby simplifying the assembly structure.

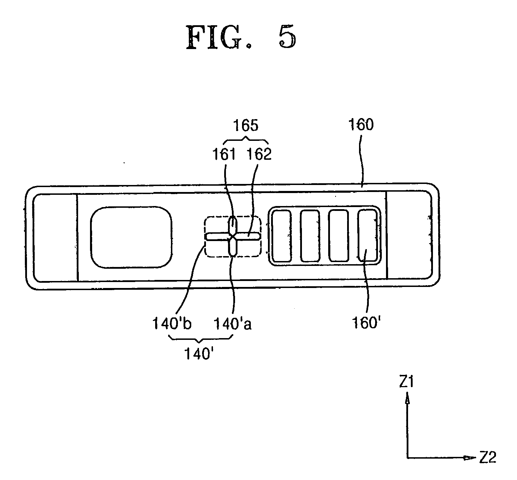

FIG. 5 shows the protrusion 165 of the upper cover 160 of FIG. 4. Referring to FIG. 5, the protrusion 165 has a cross (+) rib structure including first and second ribs 161 and 162. The first and second ribs 161 and 162 each independently extend in directions of first and second axis Z1 and Z2 to regulate the assembly position of the upper cover 160. That is, the first rib 161 acts to engage the through-hole 140' in the first axis direction Z1 to regulate the position of the upper cover 160, and the second rib 162 acts to engage the through-hole 140' in the second axis direction Z2 to regulate the position of the upper cover 160. The first and second ribs 161 and 162 may have sizes corresponding to that of the through-hole 140' so as to be engaged in the through-hole 140' of the protective circuit board 140. For example, if the through-hole 140' has a rectangular shape with a long side 140'a and a short side 140'b, the length of the first rib 161 corresponds to the length of the short side 140'b of the through-hole 140', and the length of the second rib 162 corresponds to the length of the long side 140'a of the through-hole 140'. The first and second ribs 161 and 162 regulate the assembly position of the upper cover 160 by engaging with the through-hole 140', thereby preventing the misalignment with the bare cell 100.

Since the assembly position of the upper cover 160 is easily regulated using the protrusion 165 in the structure described above, the assembling workability may be improved. Furthermore, loss time caused by displacement may be reduced by fixing the upper cover 160 at the right position, and defects caused by misalignment may also be reduced.

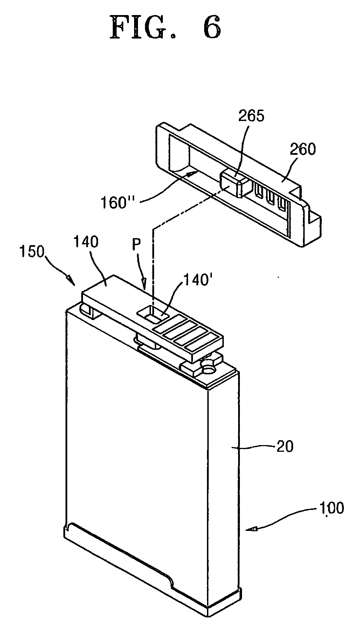

FIG. 6 is an exploded view of a battery pack according to another embodiment of the present invention. Referring to FIG. 6, the battery pack includes a bare cell 100, a PCM 150 mounted on the bare cell 100, an upper cover 260 connected to the bare cell 100 so as to accommodate the PCM 150. The upper cover 260 includes a protrusion 265 protruding downward to the PCM 150 to be engaged with an assembly position P of the PCM 150. The assembly position P of the upper cover 260 is determined by the engagement of the protrusion 265 with the PCM 150, and the upper cover 260 is fixed at the right position since the protrusion 265 acts to engage with the through hole 140'.

A through-hole 140' may be formed at the assembly position P of the PCM 150, and the protrusion 265 is engaged with the through-hole 140'. The through-hole 140' functions as a path through which a welding apparatus W (FIG. 3) passes and an assembly structure with which the protrusion 265 is engaged. The protrusion 265 may have a shape matching with the through-hole 140', for example a rectangular shape.

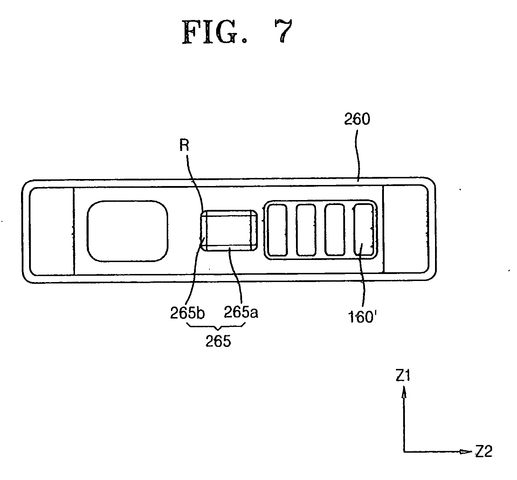

FIG. 7 shows a protrusion 265 of the upper cover 260. The protrusion 265 has a rectangular shape with a long side 265a and a short side 265b. For example, the long side 265a of the protrusion 265 acts to engage with the through-hole 140' in the second axis direction Z2 to regulate the assembly position of the upper cover 260. The short side 265b of the protrusion 265 acts to engage with the through-hole 140' in the first axis direction Z1 to regulate the assembly position of the upper cover 260. In order to maintain a close contact between the protrusion 265 and the through-hole 140', tolerance therebetween may be maintained within a predetermined range, thereby efficiently regulating the position of the upper cover 260. The protrusion 265 may have round portions R at corners thereof to reduce unnecessary interference between the protrusion 265 and the through-hole 140' during the assembly and to assist in locating the protrusion into the through-hole 140'.

The upper cover 260 may have a binding force sufficient to be integrated with the bare cell 100 to form the battery pack. For example, the protrusion 265 may be forced to be engaged with the through-hole 140' to provide a sufficient binding force. If desired, the binding force of the upper cover 260 may increase using an additional structure. For example, a double-coated tape (not shown) may be interposed between the upper cover 260 and the PCM 150 to strongly assemble the upper cover 260 with the bare cell 100.

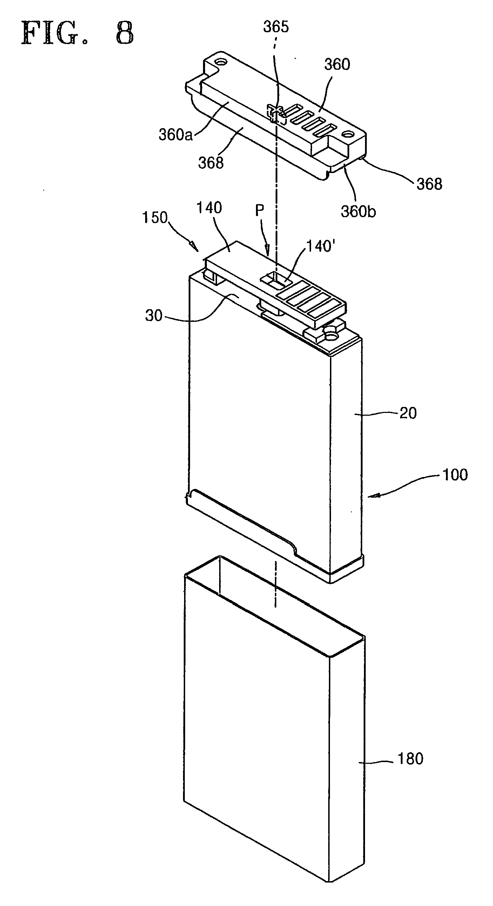

FIG. 8 is an exploded perspective view of a battery pack according to another embodiment of the present invention. Referring to FIG. 8, the battery pack includes a bare cell 100, a PCM 150 mounted on the bare cell 100, and an upper cover 360 connected to the bare cell 100 so as to accommodate the PCM 150. The PCM 150 is fixed on the bare cell 100 using spot welding, and the upper cover 360 is assembled onto the PCM 150. In this regard, the upper cover 360 includes a protrusion 365 protruding downward to the PCM 150 to be engaged with an assembly position P of the PCM 150. For example, the assembly position P of the upper cover 360 is determined by the engagement of the protrusion 365 with the PCM 150. Due to the tight coupling between the protrusion 365 and the through-hole 140', the assembly position of the upper cover 360 is regulated, and displacement of the upper cover 360 may be inhibited.

A skirt 368 extending from the edge of a side of the upper cover 360 and covering a portion of a side of the bare cell 100 is disposed along the edge of the upper cover 360. For example, the skirt 368 may extend from the long side 360a of the upper cover 360 to cover a portion of a side of the bare cell 100. The skirt 368 is used to strongly fix the upper cover 360. For example, displacement of the upper cover 360 may be inhibited by the skirt 368 that is disposed to cover a portion of a side of the bare cell 100 and holds the upper cover 360 in place. The skirt 368 and the protrusion 365 are disposed at different positions in the upper cover 360 to determine the assembly position of the upper cover 360 and inhibit displacement of the upper cover 360 from the determined assembly position. Meanwhile, although not shown herein, the skirt 368 may be formed along the short side 360b of the upper cover 360, or along the long side 360a/ short side 360b.

Meanwhile, during the last stage of the assembly of the battery pack, the outer surface of the bare cell 100 is surrounded by an insulating label sheet, or sleeve, 180 coated with an adhesive. In this regard, the skirt 368 is also surrounded by the insulating label sheet 180, and thus the binding force between the upper cover 360 and the bare cell 100 may increase by the insulating label sheet 180.

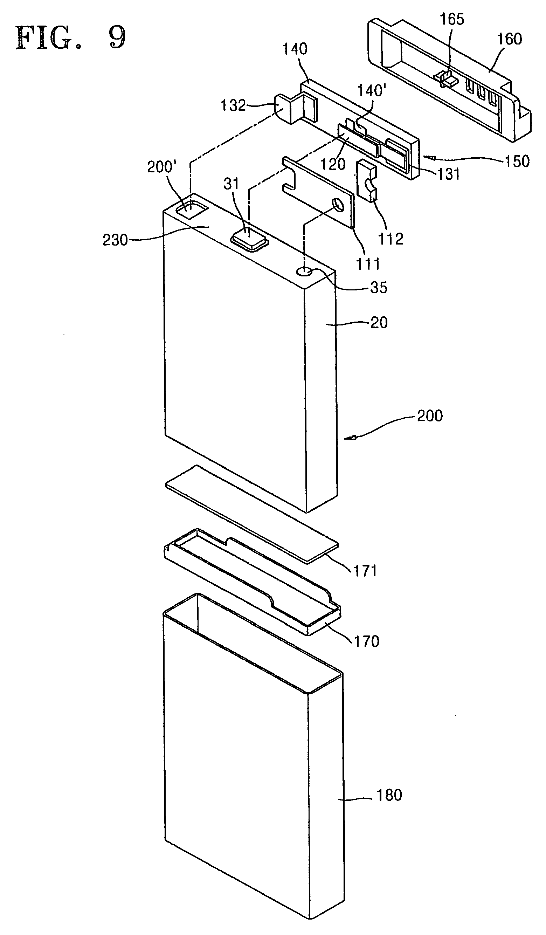

FIG. 9 is an exploded perspective view of a battery pack according to another embodiment of the present invention. Referring to FIG. 9, the battery pack includes a bare cell 200, a PCM 150 mounted on the bare cell 200, and an upper cover 160 connected to the bare cell 200 so as to accommodate the PCM 150.

Here, the upper cover 160 and the PCM 150 are aligned by engaging the protrusion 165 of the upper cover 160 into a through-hole 140' of the PCM 150.

Meanwhile, a position determining unit 200' may be disposed at a contact portion between the PCM 150 and the bare cell 200 to align the PCM 150 and the bare cell 200. As shown in FIG. 9, the position determining unit 200' may have a concave shape retracted from the upper surface of the bare cell 200. The position determining unit 200' is also referred to herein as a recess. The position determining unit 200' may be formed to match the second connecting member 132 at a contact position between the position determining unit 200' and the second connecting member 132 of the PCM 150. The displacement of the PCM 150 may be inhibited since the second connecting member 132 is inserted into the position determining unit 200', and the assembly may be easily conducted since the PCM 150 is fixed before performing an assembling process such as spot welding.

Meanwhile, the position determining unit 200' may also be disposed at the PCM 150 instead of at the bare cell 200. Alternatively, the position determining unit 200' may also be a pair disposed at the both bare cell 200 and the PCM 150 and matching with each other. Reference numeral 230 that is not described herein indicates a cap assembly. The position determining unit 200' may also be disposed in the cap assembly 230 forming the upper part of the bare cell 200.

While the present invention has been particularly shown and described with reference to exemplary embodiments thereof, it will be understood by those of ordinary skill in the art that various changes in form and details may be made therein without departing from the scope of the present invention as defined by the claims.

## Claims

1. A battery pack, comprising:
a bare cell (100) including a cap assembly (30) having a terminal (31);
a protection circuit module (150) mounted to the bare cell, the protection circuit module comprising a protection circuit board (140) and a protective device (120), the protection circuit board having a through hole (140') arranged to permit welding of the protective device (120) to the terminal (31) through the through hole; and
a cover (160, 260, 360) for covering the protection circuit module (150), the cover comprising a protrusion (165, 265, 365) arranged to engage with the through hole (140') to retain the cover to the protection circuit board.

2. The battery pack of claim 1, wherein the protrusion comprises a rib structure (165, 365) comprising first and second ribs (161, 162) arranged in a cross shape, wherein ends of the ribs are arranged to engage with sides of the through hole.

3. The battery pack of claim 1, wherein the protrusion (265) has substantially the same shape as the through hole (140'), the sides of the protrusion being arranged to engage with sides of the through hole.

4. The battery pack according to claim 3, wherein the protrusion (265) has a rectangular cross-section.

5. The battery pack according to claim 3 or 4, wherein the protrusion (265) has rounded portions at edges thereof to assist in locating the protrusion into the through hole.

6. The battery pack of any one of the preceding claims, the protection circuit board (140) comprising first and second electrode pads (141, 142).

7. The battery pack of claim 6, wherein one end of the protective device (120) is connected to the first electrode pad (141) via a first connecting member (131), the other end of the protective device being welded to the terminal (31) of the cap assembly.

8. The battery pack of claim 6 or 7, wherein the second electrode pad (142) is connected to an upper surface of the cap assembly (30) via a second connecting member (132).

9. The battery pack of claim 8, wherein the cap assembly (30) includes a recess (200') shaped to receive an end of the second connecting member (132) so as to align the protection circuit board with the bare cell.

10. The battery pack of claim 8 or 9, wherein the first connecting member (131) is a flat plate and the second connecting member (132) has a stepped shape for supporting the protection circuit board on the cap assembly.

11. The battery pack of any one of the preceding claims, further comprising double-sided tape disposed between the protection circuit board (140) and the cover to fix the cover to the protection circuit board.

12. The battery pack of any one of the preceding claims, wherein the cover (360) further comprises a skirt (368) disposed along one or more edges of the cover for engaging with a side portion of the bare cell.

13. The battery pack of any one of the preceding claims, further comprising an insulating sleeve (180) arranged to surround the bare cell.

14. The battery pack of any one of the preceding claims, further comprising an insulating element (111, 112) disposed between the cap assembly and the protective device, the insulating element having an opening corresponding to a safety vent in the bare cell.

15. A method of making a battery pack according to any one of the preceding claims, comprising:
mounting the protection circuit module (150) to the bare cell;
welding the protective device (120) to the terminal (31) of the bare cell through the through hole (140') in the protection circuit board;
pushing the cover onto the bare cell such that the protrusion (165, 265, 365) engages with the through hole to align the cover to the bare cell.

## Patentansprüche

1. Batteriepack, umfassend:
eine Rohzelle (100), enthaltend eine Kappenanordnung (30) mit einem Anschluss (31);
ein Schutzschaltungsmodul (150), das an der Rohzelle befestigt ist, umfassend eine Schutzschaltungsplatte (140) und eine Schutzvorrichtung (120), wobei die Schutzschaltungsplatte ein Durchgangsloch (140') aufweist, das so gestaltet ist, dass es das Anschweißen der Schutzvorrichtung (120) an den Anschluss (31) durch das Durchgangsloch ermöglicht; und
eine Abdeckung (160, 260, 360) zum Abdecken des Schutzschaltungsmoduls (150), wobei die Abdeckung einen Vorsprung (165, 265, 365) umfasst, der so gestaltet ist, dass er in das Durchgangsloch (140') eingreift, um die Abdeckung an der Schutzschaltungsplatte zu halten.

2. Batteriepack nach Anspruch 1, wobei der Vorsprung eine Rippenstruktur (165, 365) mit kreuzförmig angeordneten ersten und zweiten Rippen (161, 162) umfasst, wobei Enden der Rippen so gestaltet sind, dass sie in Seiten des Durchgangslochs eingreifen.

3. Batteriepack nach Anspruch 1, wobei der Vorsprung (265) im Wesentlichen dieselbe Form wie das Durchgangsloch (140') aufweist, wobei die Seiten des Vorsprungs so gestaltet sind, dass sie in Seiten des Durchgangslochs eingreifen.

4. Batteriepack nach Anspruch 3, wobei der Vorsprung (265) einen rechteckigen Querschnitt aufweist.

5. Batteriepack nach Anspruch 3 oder 4, wobei der Vorsprung (265) an seinen Kanten abgerundete Abschnitte aufweist, um das Einpassen des Vorsprungs in das Durchgangsloch zu erleichtern.

6. Batteriepack nach einem der vorangehenden Ansprüche, wobei die Schutzschaltungsplatte (140) erste und zweite Elektrodenfelder (141, 142) umfasst.

7. Batteriepack nach Anspruch 6, wobei ein Ende der Schutzvorrichtung (120) über ein erstes Verbindungsglied (131) mit dem ersten Elektrodenfeld (141) verbunden und das andere Ende der Schutzvorrichtung am Anschluss (31) der Kappenanordnung angeschweißt ist.

8. Batteriepack nach Anspruch 6 oder 7, wobei das zweite Elektrodenfeld (142) über ein zweites Verbindungsglied (132) mit einer oberen Fläche der Kappenanordnung (30) verbunden ist.

9. Batteriepack nach Anspruch 8, wobei die Kappenanordnung (30) eine Aussparung (200') enthält, die zur Aufnahme eines Endes des zweiten Verbindungsgliedes (132) geformt ist, um die Schutzschaltungsplatte an der Rohzelle auszurichten.

10. Batteriepack nach Anspruch 8 oder 9, wobei das erste Verbindungsglied (131) eine flache Platte ist und das zweite Verbindungsglied (132) eine Stufenform zum Halten der Schutzschaltungsplatte auf der Kappenanordnung aufweist.

11. Batteriepack nach einem der vorangehenden Ansprüche, ferner umfassend doppelseitiges Klebeband, das zwischen der Schutzschaltungsplatte (140) und der Abdeckung zum Fixieren der Abdeckung an der Schutzschaltungsplatte angeordnet ist.

12. Batteriepack nach einem der vorangehenden Ansprüche, wobei die Abdeckung (360) ferner eine Schürze (368) umfasst, die an einer oder mehreren Kanten der Abdeckung zum Eingreifen in einen Seitenabschnitt der Rohzelle angeordnet ist.

13. Batteriepack nach einem der vorangehenden Ansprüche, ferner umfassend eine Isolierhülse (180), die so gestaltet ist, dass sie die Rohzelle umgibt.

14. Batteriepack nach einem der vorangehenden Ansprüche, ferner umfassend ein Isolierelement (111, 112), das zwischen der Kappenanordnung und der Schutzvorrichtung angeordnet ist, wobei das Isolierelement eine Öffnung aufweist, die einem Sicherheitsventil in der Rohzelle entspricht.

15. Verfahren zur Herstellung eines Batteriepacks nach einem der vorangehenden Ansprüche, umfassend:
Befestigen des Schutzschaltungsmoduls (150) an der Rohzelle;
Anschweißen der Schutzvorrichtung (120) am Anschluss (31) der Rohzelle durch das Durchgangsloch (140') in der Schutzschaltungsplatte;
Aufschieben der Abdeckung auf die Rohzelle, sodass der Vorsprung (165, 265, 365) in das Durchgangsloch eingreift, um die Abdeckung an der Rohzelle auszurichten.

## Revendications

1. Bloc-batterie, comprenant :
une cellule nue (100) comportant un ensemble formant capot (30) ayant une borne (31) ;
un module de circuit de protection (150) monté sur la cellule nue, le module de circuit de protection comprenant une carte de circuit de protection (140) et un dispositif de protection (120), la carte de circuit de protection ayant un trou traversant (140') agencé pour permettre le soudage du dispositif de protection (120) à la borne (31) à travers le trou traversant ; et
un couvercle (160, 260, 360) destiné à couvrir le module de circuit de protection (150), le couvercle comprenant une saillie (165, 265, 365) agencée pour venir en prise avec le trou traversant (140') afin de retenir le couvercle sur la carte de circuit de protection.

2. Bloc-batterie de la revendication 1, dans lequel la saillie comprend une structure de nervure (165, 365) comprenant des première et deuxième nervures (161, 162) agencées sous forme de croix, les extrémités des nervures étant agencées pour venir en prise avec des côtés du trou traversant.

3. Bloc-batterie de la revendication 1, dans lequel la saillie (265) a sensiblement la même forme que le trou traversant (140'), les côtés de la saillie étant agencés pour venir en prise avec des côtés du trou traversant.

4. Bloc-batterie selon la revendication 3, dans lequel la saillie (265) a une section transversale rectangulaire.

5. Bloc-batterie selon la revendication 3 ou 4, dans lequel la saillie (265) a des parties arrondies au niveau de ses bords permettant d'aider à positionner la saillie dans le trou traversant.

6. Bloc-batterie de l'une quelconque des revendications précédentes, la carte de circuit de protection (140) comprenant des premier et deuxième plots d'électrode (141, 142).

7. Bloc-batterie de la revendication 6, dans lequel une extrémité du dispositif de protection (120) est reliée au premier plot d'électrode (141) par l'intermédiaire d'un premier élément de liaison (131), l'autre extrémité du dispositif de protection étant soudée à la borne (31) de l'ensemble formant capot.

8. Bloc-batterie de la revendication 6 ou 7, dans lequel le deuxième plot d'électrode (142) est relié à une surface supérieure de l'ensemble formant capot (30) par l'intermédiaire d'un deuxième élément de liaison (132).

9. Bloc-batterie de la revendication 8, dans lequel l'ensemble formant capot (30) comporte un évidement (200') façonné pour recevoir une extrémité du deuxième élément de liaison (132) afin d'aligner la carte de circuit de protection avec la cellule nue.

10. Bloc-batterie de la revendication 8 ou 9, dans lequel le premier élément de liaison (131) est une plaque plate et le deuxième élément de liaison (132) a une forme échelonnée pour maintenir la carte de circuit de protection sur l'ensemble formant capot.

11. Bloc-batterie de l'une quelconque des revendications précédentes, comprenant en outre un ruban adhésif double face disposé entre la carte de circuit de protection (140) et le couvercle pour fixer le couvercle à la carte de circuit de protection.

12. Bloc-batterie de l'une quelconque des revendications précédentes, dans lequel le couvercle (360) comprend en outre une jupe (368) disposée le long d'un ou de plusieurs bords du couvercle pour venir en prise avec une partie latérale de la cellule nue.

13. Bloc-batterie de l'une quelconque des revendications précédentes, comprenant en outre un manchon isolant (180) agencé pour entourer la cellule nue.

14. Bloc-batterie de l'une quelconque des revendications précédentes, comprenant en outre un élément isolant (111, 112) disposé entre l'ensemble formant capot et le dispositif de protection, l'élément isolant ayant une ouverture correspondant à un évent de sécurité dans la cellule nue.

15. Procédé de fabrication d'un bloc-batterie selon l'une quelconque des revendications précédentes, comprenant la fait :
de monter le module de circuit de protection (150) sur la cellule nue ;
de souder le dispositif de protection (120) à la borne (31) de la cellule nue à travers le trou traversant (140') dans la carte de circuit de protection ;
de presser le couvercle sur la cellule nue de sorte que la saillie (165, 265, 365) vient en prise avec le trou traversant pour aligner le couvercle à la cellule nue.
